# EUROPEAN PATENT SPECIFICATION

(11) **EP 0 754 273 B1**
(45) Date of publication and mention of the grant of the patent: **14.01.1998**
(21) Application number: 94911811.1
(22) Date of filing: 04.04.1994
(51) Int. Cl.: F04B 39/02, F16N 7/36

(54) **MECHANICAL OIL PUMP FOR A VARIABLE SPEED HERMETIC COMPRESSOR**
MECHANISCHE ÖLPUMPE FÜR EINEN HERMETISCHEN KOMPRESSOR VARIABLER GESCHWINDIGKEIT
POMPE A HUILE MECANIQUE POUR COMPRESSEUR HERMETIQUE A VITESSE VARIABLE

(43) Date of publication of application: 22.01.1997
(73) Proprietor: EMPRESA BRASILEIRA DE COMPRESSORES S/A - EMBRACO, 89219-901 Joinville, SC (BR)
(72) Inventor: KRUEGER, Manfred, 89227-010-Joinville, SC (BR)
(74) Representative: Fehners, Klaus Friedrich
(86) International application number: BR9400011
(87) International publication number: WO9527140

(56) References cited:
- WO-A-93/22557
- DE-A- 3 728 239
- FR-A- 2 492 471
- US-A- 3 184 157
- US-A- 3 311 292
- US-A- 3 572 978
- US-A- 4 478 559
- US-A- 4 569 639

## Description

### Field of the Invention

The present invention refers to a mechanical oil pump for variable speed hermetic compressors, particularly those with a vertical shaft and used in small refrigerating appliances, such as refrigerators and freezers.

### Background of the Invention

These appliances require that their respective hermetic compressors supply the exact refrigerating capacity necessary to remove the internal heat from the medium to be refrigerated. As the refrigerating capacity is proportional to the flow of refrigerant mass pumped by the compressor, a variation of the refrigerating capacity implies in a variation of the mass flow pumped by the compressor. A technique of continuously obtaining said variation in the mass flow is by varying the motor speed.

There are studies indicating that the variable speed compressors need an operative range from 15Hz to 100Hz, i.e., between 900 and 6000 rpm, in order to achieve a good refrigerating performance. Such speed variation affects the mechanical operation of the compressor, specially the operation of the oil pump, which is in charge of conducting the oil to the bearings of the compressor mechanism and other regions in need of lubrication, such as the connecting rod and piston.

The centrifugal pumps are the oil pumping mechanisms most used in hermetic compressors, both for their low cost and adequate operation in 3000 rpm up to 3600 rpm rotations, which result from the frequency of the electrical network. Nevertheless, such mechanisms become inoperative in low rotations.

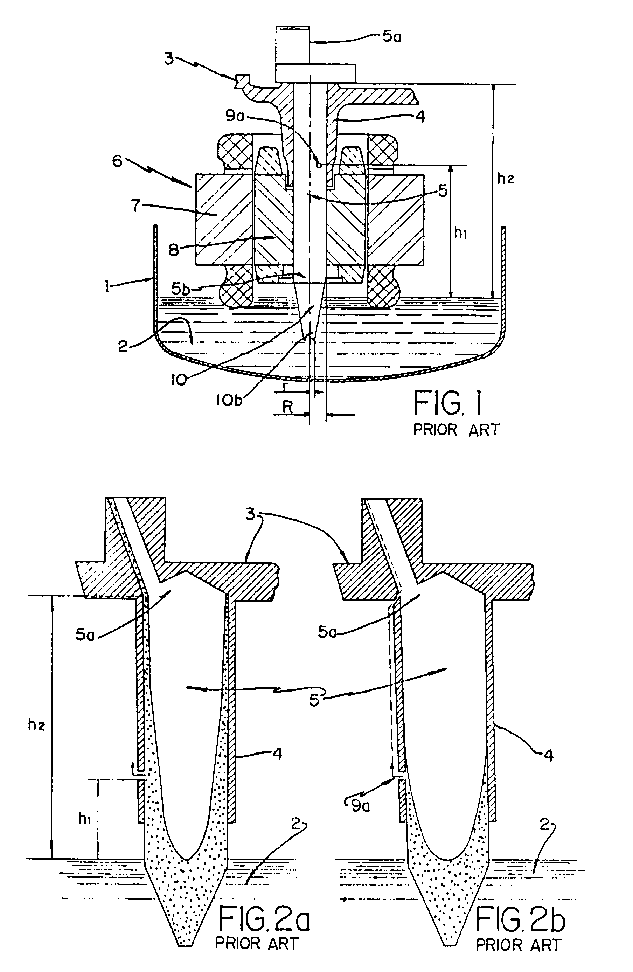

Conventional oil pumps of the centrifugal type, such as the one illustrated in figure 1 and presently in use, are not capable of pumping the oil to the bearings when the compressor needs to work at low speeds.

The operative limitations of the centrifugal pump are related to the difference between its larger radius (R) and its smaller radius (r).

The search for an increase in the oil pumping efficiency in such compressors by simply increasing the larger radius (R) of the pump is unfeasible, because such increase, which is necessarily substantial to achieve the desired pumping, also affects the external diameter of the compressor shaft and, consequently, the whole manufacturing process of the compressor and the performance thereof, since it causes greater losses due to friction. It should be observed that small diameter alterations are not enough to achieve the necessary degree of centrifugal pumping in rotations close to or lower than 900 rpm.

Conventional centrifugal pumps, which are widely used in hermetic compressors, as evidenced by the patent documents US 4,478,559; US 4,569,639; DT 209,877 and FR 2,492,471, do not present good performance when the pumping occurs in low rotations.

In another solution, described in a copending patent application of the same applicant, the oil pumping is efficient in rotations about 600 rpm and is made through dragging along helical grooves provided in the pump rotor.

### Disclosure of the Invention

Thus, it is an object of the present invention to provide an oil pump of the propulsion mechanical type for reciprocating hermetic compressors, which presents a vertical shaft, which needs to work in a wide range of rotations, which promotes an adequate lubrication, even in low rotations, and in which the flow of pumped oil is proportional to the speed of the shaft rotation.

A second object of the present invention is to provide an oil pump as mentioned above, whose pumping capacity is increased, without constructive alterations or redimensionings of the cylinder block components.

A third object of the present invention is to provide an oil pump as cited above, of simple manufacture and assembly.

A fourth object of the present invention is to provide an oil pump that does not generate oil whirl in the sump of the compressor, as it occurs with some oil pumps for conventional hermetic compressors.

These and other objectives and advantages are attained from an oil pump for a variable speed hermetic compressor of the type including: a hermetic shell, which defines a lubricant oil sump at its bottom and which lodges therewithin: a cylinder block, which supports a vertical eccentric shaft, whereto is mounted a rotor of an electric motor, the eccentric shaft being provided with at least one oil channel, having a lower end opened to the lower end of the eccentric shaft and an upper end opened to the external part of the upper median portion of the eccentric shaft, wherein the eccentric shaft-rotor assembly attaches, at its lower part, an upper axial extension of a pump rotor and a tubular sleeve attached to an inertial portion of the compressor and surrounding at least a portion of said pump rotor that is immersed in the oil mass, said oil pump comprising:
- a dragging chamber, which is defined inside the tubular sleeve, in order to receive at least the part of the pump rotor portion that is immersed in the oil mass, and which presents at least one oil inlet, communicating with the oil sump, and one oil outlet;
- at least one dragging blade, having an end mounted to said lower end portion of the pump rotor, internally to the dragging chamber, and an opposite end, which is constantly in contact with the internal wall of the dragging chamber, in order to force radially and angularly the oil that is received from the sump through the oil inlet, towards the oil outlet of said dragging chamber;
- at least one oil conducting duct, defined along at least part of the axial extension of the pump rotor, in order to have a lower end in fluid communication with the oil outlet of the dragging chamber, through a connecting channel carried by the tubular sleeve, and an upper end, opened to the lower end of the oil channel.

The oil pump as described above presents an adequate pumping capacity for rotations about 300 rpm, but it can also be used in rotations above 6000 rpm, without impairing its operation and allowing its application in compressors mounted in the conventional manner, i.e., with the motor at the lower part of the body.

### Description of the Invention

The invention will be described below, with reference to the attached drawings, in which:
Fig. 1 illustrates a prior art oil pump, in longitudinal diametral section view, mounted inside a hermetic compressor and presenting the dimensions h₁, h₂, R and r;
Figures 2a and 2b illustrate, respectively, an enlarged view of a prior art oil pump, during the oil pumping in a normal angular speed (2a) and in a reduced speed (2b);
Figures 3 and 3a illustrate an enlarged view in diametral longitudinal section, of the oil pump of the present invention and a section view according to the line III-III of figure 3; and
Figures 4 and 4a illustrate views, such as those shown in figures 3 and 3a, of another constructive option for the oil pump of the present invention.

### Best Mode of Carrying Out the Invention

According to the figures described above, a variable speed hermetic compressor of vertical shaft comprises: a hermetic shell 1, defining a lubricant oil sump 2 at its bottom and lodging therewithin: a cylinder block 3, incorporating a bearing 4 for supporting a vertical eccentric shaft 5, provided with an upper end 5a and a lower end 5b, and with an electric motor 6, having a stator 7, attached to the cylinder block 3 and a rotor 8, attached to a portion of the eccentric shaft 5, which extends downwardly from the bearing 4, defining an eccentric shaft-rotor assembly, said eccentric shaft 5 being provided with at least one oil channel 9, having a lower end 9b opened to the lower end 5b of the eccentric shaft 5 and an upper end 9a opened to the external part of the upper median portion of the eccentric shaft 5 at the bearing region 4, said eccentric shaft 5 having fitted at its lower end 5b an upper end 10a of a pump rotor 10, whose lower end 10b is immersed in the oil mass provided in the sump 2.

In these compressors, as illustrated in figures 2a and 2b, the lubrication of the piston and other components is made through centrifugation, during the rotation of the eccentric shaft-rotor assembly, said rotation being about 3000-3600 rpm during the normal operation of the compressor.

Nevertheless, in low rotations, usually lower than 2000 rpm, the lubrication of the components becomes marginal, or occasionally does not exist at all, since the oil column formed by centrifugal effect inside the oil channel 9 no longer reaches the upper end 9a of said oil channel 9.

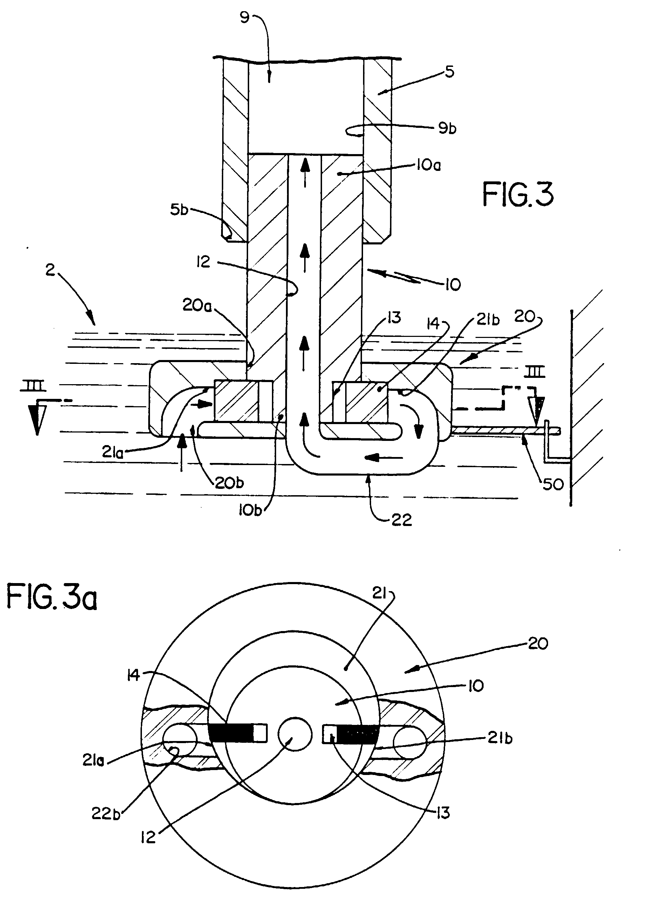

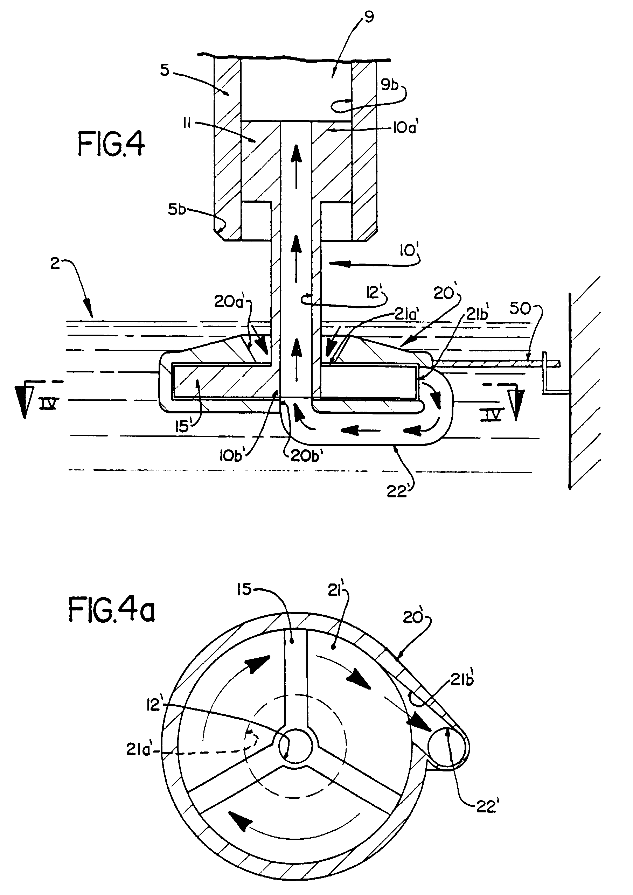

According to the illustrated figures, the oil pump of the present invention comprises a pump rotor 10 and a tubular sleeve 20, which is permanently immersed in the oil mass of the sump 2. Said pump rotor 10 is attached to the eccentric shaft-rotor assembly, so as to rotate therewith during the operation of the present pump. In the present embodiment, said attachment is made by the direct contact between the external lateral walls of the upper end 10a of the pump rotor 10 and the adjacent internal walls of the lower end 9b of the oil channel 9. Said upper end 10a may also define an attaching head 11, such as illustrated in figure 4, the embodiment of which being described ahead. The numeration used to indicate the constructive aspects of the solution illustrated in figures 3 and 4 is the same, only differing by the symbol (') in the construction of figure 4.

The tubular sleeve 20 is attached, through adequate means, such as that described in Brazilian patent application PI 9201761 of the same applicant, to a inertial portion of the motor or of the compressor shell, in order not to rotate with the pump rotor 10.

In the illustrated embodiment, said attachment takes place through an attaching arm 50, attached to the shell 1 of said compressor.

Nevertheless, other constructions for the upper portion 10a of the pump rotor 10, as well as other solutions for the fixation thereof to the eccentric shaft-rotor assembly are possible, without changing the desired results.

The pump rotor 10 presents, internally and axially disposed, an oil conducting duct 12, which is concentric to the geometric axis of the pump rotor 10 and which communicates the oil from the sump 2 with the oil channel 9, as described ahead.

Though not illustrated, other constructive options are possible for said oil conducting duct, by using a plurality of ducts, which are provided along the axial length of the pump rotor 10, externally and/or internally. It should be observed that said constructions may further present external ducts, which are helically defined at least along part of the length thereof, in function of the constructive characteristics of the tubular sleeve 20.

The construction of tubular ducts internal to the body of said pump rotor 10 further allows the definition of said ducts as an ascending diverging bundle, provided at least from the lower end 10b of said pump rotor 10.

In the constructive option illustrated in figure 3, the lower end portion 10b of the pump rotor 10 presents a pair of radial recesses 13, diametrically disposed to each other, from the peripheral edge of said lower end portion 10b, radially extending up to a predetermined distance from the geometric axis of the pump rotor 10, so as not to reach the oil conducting duct 12 which, in this construction, is located between the edges of the lower end 10b and the upper end 10a of said pump rotor 10.

Though not illustrated, other constructions presenting a plurality of recesses 13, which are preferably radial and which may be centrally communicating at this region of the pump rotor 10 may be used, without altering the results presented herein.

The radial limitation of said radial recesses 13 is due to the constant presence of oil at the adjacent portion of the oil conducting duct 12 at this region. A communication between said cavities would result in the escape of oil through the radial recesses 13 and in a loss of the pumping power. When the oil conducting duct 12 begins above the region of the pump rotor 10, where the radial recesses are located, the communication between said recesses may occur without impairing the performance of the oil pump. The height and width of the radial recesses 13 are also defined in function of the desired result of the performance of the oil pump and of the constructive characteristics of the tubular sleeve 20, as will be evidenced below.

Each radial recess 13 receives, in its inside, a respective sliding vane 14, which is freely positioned in said radial recess 13, in order to radially move therethrough between an oil dragging operative position, when said vane tends to be radially projected outwardly from the respective radial recess 13, and a retracted inoperative position, when said vane 14 is lodged in the respective radial recess 13. The vane-recess action will be described ahead.

The tubular sleeve 20 presents a central upper opening 20a, facing the rotor-eccentric shaft assembly and a lower opening 20b, which is eccentrically provided from a portion of the lower face or of the peripheral face of said tubular sleeve 20. Through the central upper opening 20a, the tubular sleeve 20 receives the lower end portion 10b of the pump rotor 10, with a minimum gap sufficient to avoid that the tubular sleeve 20 rotates jointly with the pump rotor 10.

Between said upper opening 20a and lower opening 20b is defined an oil dragging chamber 21, of cylindrical shape and with a diameter larger than that of the pump rotor 10 and with a height corresponding to the height of the radial recesses 13, said dragging chamber 21 presenting an oil inlet orifice 21a communicating with the lower opening 20b of the tubular sleeve 20 and an oil outlet orifice 21b, communicating with the oil conducting duct 12 of the pump rotor 10, through a connecting channel 22 supported by the tubular sleeve 20, said connecting channel 22 having a portion of its length inferiorly disposed to the dragging chamber 21; an oil receiving portion, which receives the oil from the oil outlet orifice 21b of said dragging chamber 21 and which supplies said oil to the lower portion of the connecting channel 22, and an oil elevating portion, which delivers the oil, that comes from said lower portion of the connecting channel 22, to the oil conducting duct 12.

The oil inlet orifice 21a and oil outlet orifice 21b are defined in such a way that, during the motion of the sliding vanes 14 between the inoperative and operative positions thereof, at the portion of the dragging chamber downstream said outlet orifice and upstream said inlet orifice, only a fine oil film remains, which does not impair the pumping efficiency and further allows the lubrication between the lower portion of the pump rotor 10 located at this region and the adjacent portion of the internal wall of said dragging chamber 21. The proximity between said walls is due to the eccentricity of the pump rotor 10 in relation to the dragging chamber 21.

Said lubrication is necessary to avoid wear in the parts submitted to frictional contact, resulting from the rotation of the pump rotor 10.

The pumping of oil from the sump 2 towards the bearing 4 and other parts to be lubricated during the compressor operation is achieved as follows. The rotation of the rotor-eccentric shaft assembly and pump rotor 10 causes the actuation of a centrifugal force on the sliding vanes 14, forcing said vanes to move away from the respective recesses 13 during part of the compressor rotation and maintaining the external end of said vanes constantly against the wall of the dragging chamber 21. Upon passing through the oil inlet orifice 21a of said dragging chamber 21, said vanes 14 force the oil coming from the oil sump 2 towards the oil outlet orifice 21b, acting as blades inside said dragging chamber 21.

Due to the eccentricity between the pump rotor 10 and the dragging chamber 21, each sliding vane 14 is forced outwardly from the respective radial recess 13, during the half turn of the pump rotor 10, i.e., between the tangency position of said pump rotor 10 relative to the internal wall of said dragging chamber 21, and the maximum spacing position between said pump rotor 10 and said dragging chamber 21. From this region of maximum spacing, said sliding vanes 14, though still being forced outwardly from the respective radial recesses 13 by action of the centrifugal force, innitiate a retracting motion towards the inside of said radial recesses 13, against the action of said centrifugal force, resulting from said eccentricity of the pump rotor and dragging chamber.

In this construction, the centrifugal force and the eccentric assembly of the parts in question act as an elastic element over the sliding vanes 14, as in the case when springs are provided between an internal end of each sliding vane 14 and the bottom of the respective radial recess 13.

Upon reaching the outlet orifice 21b of the dragging chamber 21, the oil carried by the sliding vane 14 is taken to the connecting channel 22, wherefrom said oil is conducted by said oil conducting duct 12 to the oil channel 9, in order to be distributed to the bearing and adjacent components.

In the constructive solution illustrated in figure 4, the lower end 10b' of the pump rotor 10' preferably incorporates three radial blades 15, which are fixed and stiff and angularly equidistant to each other and extending from the lower portion of said oil conducting duct 12' and which sweep the inside of the oil dragging chamber 21'. Though not illustrated, other constructions where the blade or blades, whether they are stiff or not, and incorporated or somehow attached to the pump rotor are possible, without changing the desired result.

According to what is illustrated in figure 4, the tubular sleeve 20' presents an upper inlet 20a', defining a central opening in said tubular sleeve 20', in order to receive concentrically the lower end 10b' of the pump rotor 10', and a lower outlet 20b'. Said upper inlet 20a' further defines in this construction an oil inlet 21a', said oil coming from the sump 2 and pumped to the oil conducting duct 12'. The lower inlet 20b' communicates the oil from the dragging chamber 21' with the oil conducting duct 12'.

The dragging chamber 21' further presents an oil outlet 21b', communicating the oil dragged by the radial blades 13' with an oil connecting channel 22' of the tubular sleeve 20', inferiorly disposed relative to the dragging chamber 21', said connecting channel having an oil receiving portion, facing said oil outlet 21b' and an oil delivering portion, facing the lower end of the oil conducting duct 12', as previously described with respect to the constructive option illustrated in figure 3.

In this construction, during the rotation of the eccentric shaft-rotor assembly and pump rotor 10', the oil mass that enters the upper inlet 20a' of the tubular sleeve 20' reaches the oil dragging chamber 21', then being dragged against the internal wall of the dragging chamber 21' by the radial blades 15, till reaching the connecting channel 22', wherefrom said oil mass is conducted to the oil channel 9, as previously described.

## Claims

1. Mechanical oil pump for a variable speed hermetic compressor, of the type including: a hermetic shell (1), defining a lubricant oil sump (2) at its bottom and lodging therewithin: a cylinder block (3), supporting a vertical eccentric shaft (5), whereto is mounted the rotor (8) of an electric motor (6), said eccentric shaft (5) being provided with at least one oil channel (9), having a lower end (9b) opened to the lower end (5b) of the eccentric shaft (5) and an upper end (9a) opened to the external part of the upper median portion of the eccentric shaft (5), the eccentric shaft-rotor assembly being attached, at the lower part thereof, to an upper axial extension of a pump rotor (10, 10') and to a tubular sleeve (20,20') attached to an inertial portion of the compressor and surrounding at least one portion of said pump rotor (10,10') that is immersed in the oil mass, said oil pump being characterized in that it comprises:
- a dragging chamber (21,21'), which is defined inside the tubular sleeve (20,20'), in order to receive at least the part of the pump rotor portion that is immersed in the oil mass, and which presents at least one oil inlet (21a,21a'), communicating with the oil sump (2), and one oil outlet (21b,21b');
- at least one dragging blade (14,15), having an end mounted to said lower end portion of the pump rotor (10,10') internal to the dragging chamber (21,21'), and an opposite end, which is constantly in contact with the internal wall of the dragging chamber (21,21'), in order to force radially and angularly the oil that is received from the sump (2) through the oil inlet (21a,21'), towards the oil outlet (21b,21b') of said dragging chamber (21,21');
- at least one oil conducting duct (12,12'), defined along at least part of the axial extension of the pump rotor (10,10'), in order to have a lower end in fluid communication with the oil outlet (21b,21b') of the dragging chamber (21,21'), through a connecting channel (22,22') carried by the tubular sleeve (20,20'), and an upper end, opened to the lower end (9b) of the oil channel (9).

2. Oil pump, according to claim 1, characterized in that each dragging blade (14) is defined by a sliding vane, lodged inside a respective recess (13), defined at a portion of the lower end (10b) of the pump rotor (10).

3. Oil pump, according to claim 2, characterized in that each sliding vane (14) is freely mounted inside the respective recess (13), in order to be radially movable against the internal wall of the dragging chamber (21) by action of the centrifugal force upon the rotor rotation.

4. Oil pump, according to claim 3, characterized in that the pump rotor is eccentrically positioned inside the dragging chamber (21).

5. Oil pump, according to claim 2, characterized in that the pump rotor (10) is provided with a pair of recesses (13), which are diametrically opposed to each other.

6. Oil pump, according to claim 1, characterized in that each dragging blade (15) is attached to the lower end of the pump rotor (10').

7. Oil pump, according to claim 6, characterized in that the oil inlet (21a') of the dragging chamber (21') is defined by an upper opening (20a') of the tubular sleeve (20'), which circumscribes the pump rotor (10').

8. Oil pump, according to claim 1, characterized in that the oil conducting duct (12,12') is internal to the body of the pump rotor (10,10').

9. Oil pump, according to claim 8, characterized in that said oil conducting duct (12,12') presents upper and lower ends, which are respectively opened to the upper end (10a,10a') and lower end (10b,10b') of the pump rotor (10,10').

10. Oil pump, according to claim 9, characterized in that the oil conducting duct (12,12') is concentric to the geometric axis of the pump rotor (10,10').

## Patentansprüche

1. Mechanische Ölpumpe für einen hermetischen Kompressor mit variabler Geschwindigkeit der Art mit einer hermetischen Schale (1), die einen Schmierölsumpf (2) auf ihrem Boden festlegt und in diesem einen Zylinderblock (3) aufnimmt, der eine vertikale, exzentrische Welle (5) stützt, an der der Rotor (8) eines Elektromotors (6) montiert ist, wobei die exzentrische Welle (5) mit wenigstens einem Ölkanal (9) versehen ist, der ein unteres Ende (9b), welches zu dem unteren Ende (5b) der exzentrischen Welle (5) geöffnet ist, sowie ein oberes Ende (9a) aufweist, das zu dem äußeren Teil des oberen Mittelabschnitts der exzentrischen Welle (5) offen ist, wobei die Anordnung exzentrische Welle-Rotor an ihrem unteren Teil an eine obere axiale Verlängerung eines Pumpenrotors (10, 10') und an eine rohrförmige Buchse (20, 20'), die an einem Trägheitsabschnitt des Kompressors befestigt ist und zumindest einen Abschnitt des Pumpenrotors (10, 10') umgibt, der in die Ölmasse versenkt ist, angeschlossen ist, wobei diese Ölpumpe dadurch *gekennzeichnet* ist, daß sie folgende Merkmale aufweist:
- eine Ansaugkammer (21, 21'), die innerhalb der rohrförmigen Buchse (20, 20') festgelegt ist, um zumindest den Teil des Pumpenrotorabschnitts aufzunehmen, der in die Ölmasse versenkt ist, und die zumindest einen Öleinlaß (21a, 21a'), der mit dem Ölsumpf (2) in Verbindung steht, und einen Ölauslaß (21b, 21b') aufweist;
- wenigstens einen Förderschieber (14, 15), der ein Ende, welches an diesen unteren Endabschnitt des Pumpenrotors (10, 10') innerhalb der Ansaugkammer (21, 21') befestigt ist, und ein gegenüberliegendes Ende aufweist, welches sich konstant in Kontakt mit der Innenwand der Ansaugkammer (21, 21') befindet, um radial und in Winkelrichtung das Öl, welches aus dem Sumpf (2) durch den Öleinlaß (21a, 21a') aufgenommen wird, zu dem Ölauslaß (21b, 21b') der Ansaugkammer (21, 21') zu drücken;
- wenigstens einen Ölführungskanal (12, 12'), der entlang wenigstens eines Teils der axialen Erstreckung des Pumpenrotors (10, 10') ausgebildet ist, damit er ein unteres Ende in Strömungsverbindung mit dem Ölauslaß (21b, 21b') der Ansaugkammer (21, 21') über einen Verbindungskanal (22, 22'), der von der rohrförmigen Buchse (20, 20') getragen wird, und ein oberes Ende aufweist, das zu dem unteren Ende (9b) des Ölkanales (9) geöffnet ist.

2. Ölpumpe nach Anspruch 1, dadurch gekennzeichnet, daß jeder Förderschieber (14) von einer Gleitplatte gebildet wird, die in einer entsprechenden Ausnehmung (13) aufgenommen ist, welche an einem Abschnitt des unteren Endes (10b) des Pumpenrotors (10) ausgebildet ist.

3. Ölpumpe nach Anspruch 2, dadurch gekennzeichnet, daß jede Gleitplatte (14) frei innerhalb der entsprechenden Ausnehmung (13) sitzt, um radial gegen die Innenwand der Ansaugkammer (21) unter Einwirkung der Zentrifugalkraft aufgrund der Rotordrehung beweglich zu sein.

4. Ölpumpe nach Anspruch 3, dadurch gekennzeichnet, daß der Pumpenrotor innerhalb der Ansaugkammer (21) exzentrisch angebracht ist.

5. Ölpumpe nach Anspruch 2, dadurch gekennzeichnet, daß der Pumpenrotor (10) mit einem Paar von Ausnehmungen (13) versehen ist, die einander diametral gegenüberliegen.

6. Ölpumpe nach Anspruch 1, dadurch gekennzeichnet, daß jeder Förderschieber (15) am unteren Ende des Pumpenrotors (10') befestigt ist.

7. Ölpumpe nach Anspruch 6, dadurch gekennzeichnet, daß der Öleinlaß (21a') der Ansaugkammer (21') von einer oberen Öffnung (20a') der rohrförmigen Buchse (20') gebildet wird, welche den Pumpenrotor (10') umläuft.

8. Ölpumpe nach Anspruch 1, dadurch gekennzeichnet, daß der Ölführungskanal (12, 12') innerhalb des Körpers des Pumpenrotors (10, 10') liegt.

9. Ölpumpe nach Anspruch 8, dadurch gekennzeichnet, daß der Ölführungskanal (12, 12') ein oberes und ein unteres Ende aufweist, wobei diese Enden zu dem oberen Ende (10a, 10a') bzw. zum unteren Ende (10b, 10b') des Pumpenrotors (10,10') hin offen sind.

10. Ölpumpe nach Anspruch 9, dadurch gekennzeichnet, daß der Ölführungskanal (12, 12') konzentrisch zur geometrischen Achse des Pumpenrotors (10, 10') liegt.

## Revendications

1. Pompe à huile mécanique pour un compresseur hermétique à vitesse variable, du type comprenant : une enveloppe hermétique (1), définissant un carter d'huile de lubrification (2), réalisé au niveau de sa partie inférieure, et logant : un bloc cylindre (3), supportant un arbre excentrique (5) vertical, sur lequel est monté le rotor (8) d'un moteur électrique (6), ledit arbre excentrique (5) étant pourvu d'au moins un canal d'huile (9), ayant une extrémité inférieure (9b) ouverte vers l'extrémité inférieure (5b) de l'arbre excentrique (5) et une extrémité supérieure (9a) ouverte vers la partie extérieure de la partie médiane supérieure de l'arbre excentrique (5), l'agencement arbre excentrique-rotor étant fixé, au niveau de sa partie inférieure, à un prolongement axial supérieur d'un rotor de pompe (10, 10') et à un manchon tubulaire (20, 20') fixé à une partie inertielle du compresseur et entourant au moins une partie du disque de rotor de pompe (10,10') qui est plongé dans la masse d'huile, ladite pompe à huile étant caractérisée ne ce qu'elle comprend :
une chambre d'entraînement (21, 21') qui est définie à l'intérieur du manchon tubulaire (20, 20'), en vue de recevoir au moins la partie de rotor de pompe qui est immergée dans la masse d'huile et qui présente au moins une entrée d'huile (21a, 21') communiquant avec le carter à huile (2) et une sortie d'huile (21b, 21b');
au moins une aube d'entraînement (14, 15), ayant une extrémité, montée sur ladite partie d'extrémité inférieure du rotor de pompe (10,10'), réalisée d'un seul tenant avec la chambre d'entraînement (21, 21'), et une extrémité opposée qui est constamment en contact avec la paroi interne de la chambre d'entraînement (21, 21'), en vue de forcer radialement et angulairement l'huile, qui est reçue par le carter (2) via l'entrée d'huile (21a, 21'), à se déplacer vers la sortie d'huile (21b, 21b') de la chambre d'entraînement (21, 21').
au moins un conduit d'amenée d'huile (12, 12'), défini le long d'au moins une partie de la longueur axiale du rotor de pompe (10, 10'), en vue de présenter une extrémité inférieure mise en communication fluidique avec la sortie d'huile (21b, 21b') de la chambre d'entraînement (21, 21'), via un canal de liaison (22, 22') supporté par le manchon tubulaire (20, 20'), et une supérieure ouverte vers l'extrémité inférieure (9b) du canal d'huile (9).

2. Pompe à huile selon la revendication 1, caractérisée en ce que chaque lame d'entraînement (14) est définie par une aube coulissante, logée dans une cavité respective (13) définie sur une partie de l'extrémité inférieure (10b) du rotor de pompe (10).

3. Pompe à huile selon la revendication 2, caractérisée en ce que chaque aube coulissante (14) est montée librement dans la cavité (13) respective, en vue de pouvoir se déplacer radialement contre la paroi interne de la chambre d'entraînement (21) sous l'action de la force centrifuge lors de la rotation du rotor.

4. Pompe à huile selon la revendication 3, caractérisée en ce que le rotor de pompe est disposé excentriquement dans la chambre d'entraînement (21).

5. Pompe à huile selon la revendication 2, caractérisée en ce que le rotor de pompe (10) est pourvu d'un couple de cavités (13) qui sont diamétralement opposées entre elles.

6. Pompe à huile selon la revendication 1, caractérisée en ce que chaque lame d'entraînement (15) est fixée à l'extrémité inférieure du rotor de pompe (10').

7. Pompe à huile selon la revendication 6, caractérisée en ce que l'entrée d'huile (21a') de la chambre d'entraînement (21') est définie par une ouverture supérieure (20a') du manchon tubulaire (20'), qui entoure le rotor de pompe (10').

8. Pompe à huile selon la revendication 1, caractérisée en ce que le conduit d'amenée d'huile (12,12') est interne au corps de rotor de pompe (10, 10').

9. Pompe à huile selon la revendication 8, caractérisée en ce que ledit conduit d'amenée d'huile (12, 12') présente des extrémité supérieures et inférieures qui sont respectivement ouvertes vers l'extrémité supérieure (10a, 10a') et l'extrémité inférieure (10b, 10b') du rotor de pompe (10, 10').

10. Pompe à huile selon la revendication 9, caractérisée en ce que le conduit d'amenée d'huile (12, 12') est concentrique par rapport à l'axe géométrique du rotor de pompe (10, 10').
